(19) Europäisches Patentamt
European Patent Office
Office européen des brevets

(11) **EP 3 088 800 B1**

(12) **EUROPÄISCHE PATENTSCHRIFT**

(45) Veröffentlichungstag und Bekanntmachung des Hinweises auf die Patenterteilung:
**02.12.2020 Patentblatt 2020/49**

(51) Int Cl.:
**H05B 1/02** *(2006.01)*    **F22B 1/28** *(2006.01)*

(21) Anmeldenummer: **16162649.4**

(22) Anmeldetag: **29.03.2016**

(54) **HEIZEINRICHTUNG ZUM ERHITZEN VON FLÜSSIGKEITEN, VERDAMPFER FÜR EIN ELEKTROGARGERÄT UND VERFAHREN ZUM BETRIEB EINER HEIZEINRICHTUNG**

HEATING DEVICE FOR HEATING LIQUIDS, EVAPORATOR FOR AN ELECTRIC COOKING APPARATUS AND METHOD FOR OPERATING A HEATING DEVICE

DISPOSITIF DE CHAUFFAGE DE LIQUIDES, EVAPORATEUR POUR UN APPAREIL DE CUISSON ELECTRIQUE ET PROCEDE DE FONCTIONNEMENT D'UN DISPOSITIF DE CHAUFFAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.04.2015 DE 102015207253**

(43) Veröffentlichungstag der Anmeldung:
**02.11.2016 Patentblatt 2016/44**

(73) Patentinhaber: **E.G.O. Elektro-Gerätebau GmbH**
**75038 Oberderdingen (DE)**

(72) Erfinder:
• **Eigl, Sebastian**
**75015 Bretten (DE)**
• **Köbrich, Holger**
**76703 Kraichtal-Gochsheim (DE)**
• **Mandl, Matthias**
**75015 Bretten (DE)**
• **Mühlnikel, Roland**
**75015 Bretten (DE)**
• **Robin, Bernd**
**76703 Kraichtal (DE)**
• **Schmieder, Manuel**
**75038 Oberderdingen (DE)**
• **Suß, Alfred**
**75015 Bretten (DE)**
• **Tafferner, Michael**
**76316 Malsch (DE)**

(74) Vertreter: **Patentanwälte**
**Ruff, Wilhelm, Beier, Dauster & Partner mbB**
**Kronenstraße 30**
**70174 Stuttgart (DE)**

(56) Entgegenhaltungen:
EP-A2- 0 363 708     EP-A2- 1 152 639
WO-A2-2008/151798    DE-A1-102012 213 385
DE-A1-102013 200 277

## Beschreibung

Die Erfindung betrifft eine Heizeinrichtung zum Erhitzen von Flüssigkeiten und/oder zum Verdampfen von Flüssigkeiten für ein Elektrogargerät, insbesondere für einen Dampfgarer, sowie einen Verdampfer für ein Elektrogargerät mit einer solchen Heizeinrichtung und ein Verfahren zum Betrieb einer solchen Heizeinrichtung bzw. zum Betrieb eines entsprechenden Elektrogargeräts.

Aus der WO 02/12790 A1 ist ein Gargerät mit Dampferzeugung mittels einer Heizeinrichtung bekannt, die einen Dampferzeugungsbehälter in Form eines senkrecht stehenden Rohres aufweist. Außen an dem Dampferzeugungsbehälter ist ein flächiges Heizelement angeordnet. Eine Wasserzufuhr in den Dampferzeugungsbehälter erfolgt von unten, während der erzeugte Dampf nach oben entweichen kann und im Gargerät zum Dampfgaren verwendet wird.

Aus der WO 2008/151798 A2 ist eine Heizeinrichtung für einen Dampferzeuger bekannt, wobei der Dampferzeuger einen aufrechten rundzylindrischen Behälter für Wasser aufweist. In diesem zylindrischen Behälter kann mit etwas Abstand dazu ein zweiter Behälter eingesetzt sein, um das vorhandene Wasservolumen zu reduzieren. Außen auf dem äußeren Behälter sind flächig Heizelemente vorgesehen, eventuell auch an der Innenseite des inneren Behälters. Temperatursensoren können auf einer Außenseite des äußeren Behälters und an einem Boden des Wasservolumens vorgesehen sein.

Aus der EP 0 363 708 A2 ist eine Heizvorrichtung für Wasser zur Erzeugung heißen Wassers und/oder von Dampf bekannt. Heizelemente zum Erhitzen des Wassers können entweder an einem Boden des Behälters oder an einer Außenseite des Behälters vorgesehen sein. An einer Außenseite sind durch Fühlerrohre gebildete Temperaturfühler vorgesehen, wobei die Fühlerrohre über eine Kapillarleitung mit einem Temperaturschalter verbunden sind. Ein weiterer solcher Temperaturfühler ragt von oben durch einen Deckel in das Innere des Behälters.

Aus der EP 1 152 639 A2 ist es bekannt, eine flache Heizeinheit mit einem Träger und an seiner Unterseite vorgesehenen Heizelementen als Boden eines Wasserkochers zu verwenden. Die Heizelemente sind als Heizleiterbahnen auf die Unterseite des Trägers aufgebracht. In einem freien Mittelbereich des Trägers ist eine längliche, mäanderförmige Widerstandsbahn als Temperatursensor vorgesehen.

AUFGABE UND LÖSUNG

Der Erfindung liegt die Aufgabe zugrunde, eine eingangs genannte Heizeinrichtung und einen Verdampfer für ein Elektrogargerät sowie ein Verfahren zum Betrieb einer solchen Heizeinrichtung bzw. eines Verdampfers zu schaffen, mit denen Probleme des Standes der Technik gelöst werden können und es insbesondere möglich ist, Flüssigkeiten schnell, energieeffizient und gleichzeitig zuverlässig sowie fehlerunanfällig zu verdampfen. So sollen ein Verdampfer und ein Elektrogargerät sicher mit hoher Leistung betrieben werden können.

Gelöst wird diese Aufgabe durch eine Heizeinrichtung mit den Merkmalen des Anspruchs 1, einen Verdampfer für ein Elektrogargerät bzw. ein entsprechendes Elektrogargerät mit den Merkmalen des Anspruchs 14 und ein Verfahren mit den Merkmalen des Anspruchs 15. Vorteilhafte sowie bevorzugte Ausgestaltungen der Erfindung sind Gegenstand der weiteren Ansprüche und werden im Folgenden näher erläutert. Dabei werden manche der Merkmale nur für die Heizeinrichtung, nur für den Verdampfer bzw. das Elektrogargerät oder nur für das Verfahren beschrieben. Sie sollen jedoch unabhängig davon sowohl für die Heizeinrichtung als auch den Verdampfer bzw. das Elektrogargerät und das Verfahren selbstständig gelten können. Der Wortlaut der Ansprüche wird durch ausdrückliche Bezugnahme zum Inhalt der Beschreibung gemacht.

Die Heizeinrichtung, die zum Erhitzen von Flüssigkeiten und/oder zum Verdampfen von Flüssigkeiten, insbesondere von Wasser, für ein Elektrogargerät, insbesondere einen Verdampfer bzw. ein Dampfgargerät, verwendet wird, weist die folgenden Merkmale auf. Sie weist einen Behälter für die zu verdampfende Flüssigkeit auf, wobei der Behälter aufrecht angeordnet ist bzw. seine Höhe größer ist als seine Breite. Vorteilhaft ist der Behälter höher als breit, besonders vorteilhaft zweimal bis fünfmal so hoch wie breit, er kann aber auch breiter sein als hoch. Er kann grundsätzlich beliebigen Querschnitt aufweisen, vorteilhaft einen runden bzw. kreisrunden Querschnitt. Er kann bevorzugt zylindrisch ausgebildet sein, insbesondere als rundes Zylinderrohr. Der Durchmesser kann zwischen 3 cm und 15 cm liegen und die Höhe entsprechend sein.

An einer Außenseite einer seitlichen Behälterwand, die den Mantel des Behälters bildet, sind Heizelemente flächig verteilt angeordnet. Sie sollten einen Großteil der Außenseite bedecken, beispielsweise zwischen 60% und 90%. Die Heizelemente können unterschiedlich ausgebildet sein, vorteilhaft sind es flächige Heizelemente, insbesondere Schichtheizelemente bzw. Dickschichtheizelemente. Solche Heizelemente sind beispielsweise aus der DE 102012213385 A1 bekannt. Die Heizelemente sind auf mindestens drei separate und/oder separat betreibbare Heizkreise aufgeteilt. Jeder dieser Heizkreise weist mindestens ein Heizelement auf. Die Definition eines Heizelementes umfasst einen Abschnitt eines elektrischen Widerstands, der bei Betrieb mit Stromfluss heiß wird bzw. sich aufheizt. Ein Heizelement kann dabei insbesondere aus einem entsprechenden Widerstandsmaterial bestehen und zwischen zwei Anschlüssen oder Kontaktierungen verlaufen. Ein Heizkreis definiert sich dadurch, dass die von ihm umfassten Heizelemente nur gemeinsam betrieben werden können, also ein- und ausgeschaltet. Vorteilhaft werden die Heizelemente eines gemeinsamen Heizkreises vom selben Strom durchflossen, sind also in Reihe geschaltet.

Vorteilhaft weist ein Heizkreis mehrere Heizelemente auf, die aber besonders vorteilhaft seriell geschaltet sind. Des Weiteren sind mehrere Temperatursensoren an der Außenseite vorgesehen, da die Temperaturerfassung bei einer Heizeinrichtung bzw. einem Verdampfer sowohl für den regulären Betrieb als auch zur Erkennung von Störungen oder Fehlern im Betrieb wichtig ist. Die Temperatursensoren sind in mindestens zwei Arten vorhanden bzw. es sind mindestens zwei Arten von Temperatursensoren vorhanden.

Die erste Art von Temperatursensoren sind diskrete Bauteile, die auf die Außenseite der Behälterwand aufgesetzt sind, beispielsweise sind es SMD-Bauteile. Dabei sind sie beispielsweise auf entsprechende Kontaktfelder aufgesetzt und elektrisch kontaktiert sowie befestigt. Vorteilhaft sind die Temperatursensor der ersten Art und die Heizelemente unterschiedliche Bauteile. Eine zweite Art von Temperatursensoren ist vorteilhaft als flächige Beschichtung oder als eine eine Fläche überdeckende Beschichtung an der Außenseite der Behälterwand aufgebracht. Der Unterschied zu den Temperatursensoren der ersten Art liegt also darin, dass durch die flächige Beschichtung mit einer gewissen Größe bzw. Ausdehnung, insbesondere mit einem signifikanten Anteil an der Fläche der Außenseite der Behälterwand, auch eine quasi-flächige Überwachung einer Temperatur bzw. heißer Stellen möglich ist. Hierzu wird nachfolgend noch mehr erläutert.

Durch die Aufteilung der Beheizung für die Heizeinrichtung in mehrere separate und separat betreibbare Heizkreise wird eine weite Einstellbarkeit der Beheizung bzw. der eingebrachten Heizleistung an der Heizeinrichtung erreicht. Somit kann unter Umständen ein Heizkreis auch abgeschaltet werden, beispielsweise wenn er nicht benötigt wird oder eine Fehlfunktion aufweist. Es ist auch möglich, einen Heizkreis noch einmal sozusagen zu unterteilen in zwei oder mehr Teil-Heizkreise, von denen jeder seine eigenen Heizelemente aufweist. Die Unterteilung kann in einen oberen Teil-Heizkreis und einen unteren Teil-Heizkreis erfolgen, alternativ in mäanderartig verschränkte oder ineinander greifende Teil-Heizkreise. Jeder von diesen kann dann separat betrieben werden, beispielsweise durch einen Anschluss als Zwischenabgriff, sie müssen also nicht gemeinsam betrieben werden. Zumindest ein Teil-Heizkreis sollte abschaltbar ausgebildet sein. Vorteilhaft ist der oberste Heizkreis so ausgebildet und/oder der mittlere Heizkreis.

Durch die mehreren Temperatursensoren kann in entsprechend mehreren Bereichen sowohl der Betrieb der Heizeinrichtung als auch deren Zustand überwacht werden, insbesondere hinsichtlich Störfällen oder Verkalkung an der Innenseite der Behälterwand. Dies ist für Heizeinrichtungen von Flüssigkeiten bzw. Verdampfern stets ein wichtiges Thema.

In Ausgestaltung der Erfindung sind die Temperatursensoren der ersten Art NTC-Sensoren, wie sie grundsätzlich bekannt sind. Sie können eben vorteilhaft als SMD-Bauteile ausgebildet sein und an entsprechende Kontaktfelder an der Außenseite aufgebracht werden. Ein solcher Temperatursensor der ersten Art misst die Temperatur in einem räumlich sehr eng begrenzten Bereich um ihn herum, beispielsweise 1 cm oder weniger bei SMD-Bauteilen. Wird ein solcher Temperatursensor der ersten Art auf einer Höhe an der Behälteraußenseite angebracht, auf der im Betrieb immer Wasser angeordnet ist, so kann er die Wassertemperatur in etwa erfassen mit geringer Verfälschung durch eine räumliche Nähe zu einem Heizelement einerseits und durch die Trennung von der zu erhitzenden Flüssigkeit durch die Behälterwand andererseits. Größere oder großflächige Temperaturüberwachungen sind damit eher nicht gut durchführbar.

In vorteilhafter Ausgestaltung der Erfindung ist pro Heizkreis mindestens ein Temperatursensor der ersten Art vorgesehen, besonders vorteilhaft genau ein einziger Temperatursensor der ersten Art. Ein solcher Temperatursensor der ersten Art kann im Bereich und entlang einer Längsachse des Behälters auf Höhenniveau des jeweiligen Heizkreises vorgesehen sein, also quasi nahe zu einem Heizkreis vorgesehen sein und damit diesem zugeordnet. Es kann vorgesehen sein, dass für mindestens den untersten Heizkreis, vorteilhaft für die beiden untersten Heizkreise, jeweils genau ein Temperatursensor der ersten Art vorgesehen ist. Dieser kann dann wiederum jeweils im unteren Bereich dieses Heizkreises vorgesehen sein, beispielsweise auf Höhe von dessen unterstem Heizelement. So kann die Temperatur einer Flüssigkeit mit einer Füllstandshöhe erfasst werden, die von unten gerade an den Heizkreis heranreicht.

Ein Abstand eines solchen Temperatursensors der ersten Art zu einem nächstgelegenen Heizelement kann zwischen dem Zweifachen und dem Zwanzigfachen der Dicke der Behälterwand liegen, vorteilhaft zwischen dem Fünffachen und dem Zehnfachen. Somit ist der Abstand nicht besonders groß, er kann auch beispielsweise das Einfache bis Dreifache der maximalen Längserstreckung des Temperatursensors betragen. Damit kann der Temperatursensor der ersten Art im Wesentlichen frei von Einflüssen eines nächstgelegenen Heizelements die Temperatur der Behälterwand in seinem nächsten Bereich und somit die Temperatur einer Flüssigkeit innen im Behälter in diesem Bereich erfassen. Ist die Flüssigkeit Wasser und beträgt die Temperatur deutlich über 100°C, so kann, wie später noch ausgeführt wird, leicht darauf geschlossen werden, dass im Bereich dieses Temperatursensors kein Wasser mehr vorhanden ist, was dann ggf. zum Abschalten des diesem Temperatursensor der ersten Art zugeordneten Heizkreises führen kann.

Für den obersten Heizkreis kann vorgesehen sein, dass der zugehörige Temperatursensor der ersten Art in dessen oberen Bereich angeordnet ist, vorteilhaft nahezu ganz oben. Ein Abstand zu den Heizelementen kann im Wesentlichen sein wie zuvor beschrieben, unter Umständen etwas geringer sein.

Für den Temperatursensor der zweiten Art kann in Ausgestaltung der Erfindung auf der Außenseite der Behälterwand eine dielektrische Isolationsschicht aufgebracht sein, über der wiederum die Heizelemente eines Heizkreises aufgebracht sind. Über diesem Heizelement kann wiederum eine Abdeckschicht vorgesehen sein, die auch zu Isolationszwecken dienen kann sowie zur Vermeidung von Korrosion. Des Weiteren ist eine Messelektrode vorgesehen auf der Isolationsschicht oder vorteilhaft auf einer leitfähigen Fläche darunter, die als elektrischer Anschluss an die Isolationsschicht dient. Bei einem metallischen Behälter ist seine Außenseite diese leitfähige Fläche. Eine Messeinrichtung, die zu der Heizeinrichtung gehört und vorteilhaft in deren Steuerung integriert ist, ist sowohl mit dieser Messelektrode als auch mit den Heizelementen bzw. einem jeweiligen Heizkreis über der dielektrischen Isolationsschicht verbunden, die als andere Elektrode dienen. Die Messeinrichtung ist dabei ausgebildet, um einen Stromfluss zwischen den Heizelementen bzw. dem Heizkreis und der Messelektrode zu erfassen. Dieser Stromfluss wiederum kann als Maß für eine Temperaturänderung an dem Heizkreis bzw. an dem Behälter im Bereich nahe dem Heizkreis verwendet werden.

Eine solche Art der Temperaturerfassung bei flächig verteilten Heizelementen über eine dielektrische Isolationsschicht ist aus der DE 102013200277 A1 sowie der WO 2007/136268 A1 bekannt, auf welche explizit verwiesen wird, insbesondere bzgl. der Ausgestaltung der dielektrischen Isolationsschicht. Hier wird der sogenannte Ableitstrom gemessen, der über bzw. durch die Isolationsschicht an die Heizelemente des Heizkreises fließt. Mit steigender Temperatur wird die Isolationsschicht stromführender bzw. ihr elektrischer Widerstand geringer, da diese Eigenschaft stark temperaturabhängig ist. Selbst bei einer lokalen Überhitzung bzw. einer lokal eng begrenzten Überhitzung, beispielsweise auf 200°C bis 250°C, kann dies innerhalb der relativ großen Fläche eines gesamten Heizkreises entdeckt werden, da in diesem Bereich der Überhitzung der elektrische Widerstand der Isolationsschicht deutlich sinkt und somit auf einmal ein Ansteigen des Stroms über die Isolationsschicht hin zu den Heizelementen erfolgt. An welcher Stelle diese lokale Überhitzung auftritt kann zwar nicht erfasst werden, ist aber auch ohne Belang, da eine solche lokale Überhitzung auf alle Fälle als Fehler gewertet wird und somit zum Abschalten des entsprechenden Heizkreises oder sogar der gesamten Heizeinrichtung führen kann. Somit kann mit den Temperatursensoren der zweiten Art ein großer Bereich auf starke Temperaturüberhöhungen überwacht werden, die dann aber nicht großflächig erfolgen müssen, sondern bereits relativ punktuell erfasst werden können.

Die dielektrische Isolationsschicht ist vorteilhaft direkt auf die Außenseite der Behälterwand aufgebracht und bedeckt einen Großteil von deren gesamter Oberfläche. Insbesondere bedeckt die Isolationsschicht mindestens 90% der Oberfläche der Außenseite, wobei es vorteilhaft eine einzige durchgehende dielektrische Isolationsschicht unter allen Heizelementen ist. Eine Aufteilung auf die einzelnen Heizkreise mit jeweiliger Trennung voneinander ist nicht notwendig, da über Kontaktierung an den entsprechenden Heizkreis als eine Art Elektrode erfasst werden kann, was sich im Bereich dieses Heizkreises ereignet.

In Ausgestaltung der Erfindung verlaufen die Messelektrode und die Heizelemente in unterschiedlichen Schichten. Zwischen ihnen können sich die Isolationsschicht und/oder eine Abdeckschicht befinden. Eine solche Messelektrode kann flächig ausgebildet sein und im Wesentlichen die Heizelemente überdecken, so dass diese selbst nicht als Messelektrode benutzt werden müssen und eine bessere Trennung möglich ist. Eine erste Messelektrode kann eben vorteilhaft an die Außenseite der seitlichen Behälterwand direkt aufgebracht werden, wenn diese aus Metall besteht. Somit ist diese erste Messelektrode quasi durchgängig über alle Heizkreise verteilt. Die Unterteilung der Temperaturerfassung auf die Bereiche der einzelnen Heizkreise erfolgt aber eben durch Kontaktierung an den Heizkreisen selbst.

In weiterer Ausgestaltung der Erfindung kann auf der Isolationsschicht eine weitere Zusatz-Isolationsschicht aufgebracht sein. Sie kann vorteilhaft eine sogenannte Zwischen-Glasschicht sein. Die Heizelemente können dabei auf die Zusatz-Isolationsschicht aufgebracht sein. Dadurch kann der Effekt für die Temperaturmessung verstärkt werden.

Vorteilhaft ist pro Heizkreis mindestens ein Temperatursensor der zweiten Art vorgesehen, vorzugsweise genau ein Temperatursensor der zweiten Art. Dieser Temperatursensor bedeckt dann mindestens 50% der Fläche der Heizelemente des zugehörigen Heizkreises, insbesondere 90% bis 100%. Dann kann die gesamte Fläche dieses Heizkreises auf lokale Temperaturerhöhungen überwacht werden, wie es zuvor beschrieben worden ist.

In vorteilhafter Ausgestaltung der Erfindung können alle Heizkreise eine ähnlich hohe elektrische Leistung aufweisen, besonders vorteilhaft dieselbe elektrische Leistung. Diese kann im Bereich von wenigen Kilowatt liegen, beispielsweise etwa 3 kW pro Heizkreis.

Erfindungsgemäß ist in Höhenerstreckung des Behälters jeder Heizkreis von den anderen Heizkreisen beabstandet. Somit bedeckt jeder Heizkreis einen eigenen Höhenbereich der Außenseite der Behälterwand, die Heizkreise überlappen sich also nicht in der vertikalen Richtung. Vorzugsweise sind zumindest die beiden untersten Höhenbereiche und somit auch Heizkreise gleich hoch. Insbesondere sind dabei die beiden untersten Heizkreise bzgl. ihrer Heizelemente und/oder Anordnung identisch ausgebildet. Dies kann auch für die Anordnung eines Temperatursensors der ersten Art und/oder der zweiten Art an dem jeweiligen Heizkreis gelten. Der oberste Höhenbereich bzw. Heizkreis kann etwas höher sein, beispielsweise maximal 20% höher sein.

Das oberste Heizelement des obersten Heizkreises kann einen größeren Abstand in der Höhe zu dem benachbarten darunterliegenden Heizelement aufweisen, als dieses wiederum zu den benachbarten darunterliegenden Heizelementen. Dieser größere Abstand kann zwischen 20% und 90% einer Breite des Heizelements liegen. Ansonsten können die Heizelemente allgemein einen sehr geringen Abstand zueinander aufweisen, beispielsweise 3% bis 10% ihrer Breite.

In vorteilhafter Ausgestaltung der Erfindung sind die Heizelemente als Heizleiter in Bahnform ausgebildet. Diese Bahnen können sämtlich parallel zueinander verlaufen, wobei die Bahnen auf gleicher Höhe rechtwinklig zur Längsachse des Behälters verlaufen und auf einer Höhe jeweils nur eine einzige Bahn bzw. ein einziges Heizelement.

In weiterer Ausgestaltung der Erfindung können bei einem Heizkreis Heizelemente in mindestens zwei unterschiedlichen Ausgestaltungen vorgesehen sein, wobei sich diese Heizelemente bzgl. elektrischer Leistung, Länge, Breite und/oder Dicke unterscheiden. Vorteilhaft unterscheiden sie sich nur bzgl. eines dieser vorgenannten Kriterien und nicht bzgl. der anderen vorgenannten Kriterien, besonders vorteilhaft unterscheiden sie sich bzgl. ihrer Breite und somit ihres elektrischen Widerstands.

Die Heizelemente sind bevorzugt als Heizleiter in Bahnform ausgebildet und verlaufen parallel zueinander. Mehrere Heizleiter eines Heizelements oder eines Heizkreises sind dabei vorteilhaft separat voneinander ansteuerbar und können parallel zueinander geschaltet sein bzw. schaltbar sein. So ergibt sich eine einfache Ansteuerung.

Es ist alternativ möglich, dass die Heizelemente als Heizleiter in Bahnform ausgebildet sind und sämtlich zwar parallel zueinander verlaufen, aber mehrere Heizelemente bzw. Heizleiter als Bahnen elektrisch seriell zusammen geschaltet sind, also in Reihe, und insbesondere mäanderförmig verlaufen. Vorteilhaft weisen dabei mindestens zwei Heizelemente eines gemeinsamen Heizkreises mehrere mäanderförmig ineinander verlaufende Heizleiter in Bahnform auf.

In Weiterbildung dieser Ausgestaltung ist es möglich, dass ein Zusatz-Heizleiterkontakt an ein Heizelement bzw. an einen Heizkreis vorgesehen ist zur elektrischen Ansteuerung des Heizelements oder Heizkreises bzw. Leistungsbeaufschlagung nur eines Teils des Heizelements als Teil-Heizelement oder nur eines Teil-Heizkreises bzw. nur eines Teils seiner Heizleiter in Bahnform. Dieser Zusatz-Heizleiterkontakt kann zwischen einem von zwei End-Heizleiterkontakten des Heizelements vorgesehen sein und zu einem von diesen hin das aktivierte Teil-Heizelement bilden.

Vorteilhaft weist ein gerader Bereich entlang der Längsachse des Behälters Streifenform auf und ist frei von Heizelementen und Temperatursensoren. Dieser Streifen kann eine Breite von 1% bis 5% oder 10% des Umfangs des Behälters aufweisen. In diesem freien Bereich kann beispielsweise eine Schweißnaht verlaufen, mittels der ein flaches Blech zu dem runden Behälter geformt ist.

Ein erfindungsgemäßer Verdampfer, der in einem eingangs genannten Elektrogargerät bzw. einem Dampfgargerät verwendet werden kann, weist mindestens eine vorbeschriebene Heizeinrichtung auf. In die Heizeinrichtung bzw. in den Behälter führt eine Wasserzuleitung, vorteilhaft von unten durch einen Boden des Behälters, insbesondere zentral. Oben aus dem Behälter entströmt der erzeugte Dampf, der in einen Garraum des Geräts eingebracht wird, in dem beispielsweise Nahrungsmittel zubereitet werden, insbesondere erwärmt. Die Steuerung der Heizeinrichtung bzw. der Dampferzeugung erfolgt über mehrere Parameter, beispielsweise Temperaturmessung und Dampfmessung bzw. Feuchtemessung in dem Garraum.

Beim Betrieb einer solchen Heizeinrichtung können neben den Betriebsparametern der Heizkreise bzw. Heizelemente selbst die vorgenannten Temperatursensoren der ersten Art und der zweiten Art ausgewertet werden. Damit können beispielsweise die im Folgenden beschriebenen Ereignisse festgestellt werden. Zum einen kann eine zunehmende Verkalkung an einer Innenseite der Behälterwand festgestellt werden. Diese ist problematisch dahingehend, da dann die Wärmeübertragung von den Heizelementen an der Außenseite des Behälters auf die darin befindliche Flüssigkeit schlechter wird. Somit sinkt nicht nur der Wirkungsgrad der Heizeinrichtung bzw. des Verdampfers bzgl. Energieeffizienz, sondern es können unter Umständen die geforderten Dampf- und Temperaturwerte nicht mehr erreicht werden. Darüber hinaus besteht eine Gefahr einer Überhitzung, insbesondere an der Außenseite bzw. an den Heizelementen, was bis zu einer Beschädigung führen kann. Dies soll verhindert werden, deswegen darf keine allzu starke großflächige Verkalkung entstehen. Des Weiteren kann eine lokal begrenzte Überhitzung an der Innenseite der Behälterwand erfasst werden. Diese kann beispielsweise durch eine vorbeschriebene zunehmende lokale Verkalkung auftreten, wobei sie eben ein zusätzliches und in aller Regel gravierenderes weil kritischeres Problem darstellt. Insbesondere kann hier auch die Heizeinrichtung beschädigt oder sogar zerstört werden.

Des Weiteren kann das Absinken einer Füllstandshöhe von Wasser bzw. Flüssigkeit in dem Behälter unter einen der Heizkreise erfasst werden. Fällt die Füllstandshöhe an dem obersten Heizkreis ab, so muss dieser unter Umständen insgesamt abgeschaltet werden und gleichzeitig Flüssigkeit bzw. Wasser nachgefüllt werden, da ansonsten ein Betrieb dieses obersten Heizkreises nicht mehr möglich ist. Des Weiteren kann das Absinken der Füllstandshöhe unter ein oberstes Heizelement des obersten Heizkreises erfasst werden, wenn auf dessen Höhe ein Temperatursensor der ersten Art angeordnet ist. Dann kann für dieses oberste Heizelement des obersten Heizkreises vorgesehen sein, dass es, wie zuvor beschrieben worden ist, einen etwas größeren Abstand zum nächst gelegenen Heizelement aufweist. Die Flächenlast bzw. Flächenleistung kann für dieses oberste Heizelement geringer sein als für die anderen, beispielsweise 3% bis 20% oder sogar 35%. Es kann so ausgelegt sein, dass auf seiner Höhe kein Wasser mehr im Inneren des Behälters sein muss und dennoch keine kritische hohe Temperatur in seinem Bereich auftritt, die zu einer Beschädigung führen könnte. Deswegen ist dieses oberste Heizelement eben etwas höher angeordnet. Es kann auch bei derselben Länge wie die anderen Heizelemente etwas breiter sein, beispielsweise 3% bis 20% oder sogar 35%, wodurch sich bei gleichem Stromdurchfluss wie durch die anderen Heizelemente die geringere Leistung ergibt. Es kann auch bei größerer beheizter Fläche aufgrund des größeren Abstands zum nächsten Heizelement die Flächenleistung etwas geringer sein, wenn die Flächenleistung auf die Fläche der Behälterwand mit Heizelementfläche plus Abstandsfläche bezogen gesehen wird.

In Ausgestaltung der Erfindung kann ein elektrischer Widerstand der Heizkreise bzw. von deren Heizelementen im zeitlichen Verlauf überwacht und ausgewertet werden. So kann eine großflächige Verkalkung an der Innenseite der Behälterwand erkannt werden, wenn nämlich der zeitliche Verlauf dieses elektrischen Widerstands verglichen wird mit einer Auswertung bzw. einem zeitlichen Verlauf der Temperatursensoren der zweiten Art, die die flächige Temperaturüberwachung darstellen. Eine solche großflächige Verkalkung baut sich nämlich langsam auf über eine längere Betriebsdauer hinweg, beispielsweise erst ab einigen Stunden Betriebsdauer.

Anhand des zeitlichen Verlaufs der Verkalkung über den Betrieb bzw. eine Betriebsdauer kann über eine mathematische Funktion der verbleibende Zeitraum bis zu einer kritischen Temperatur bzw. Verkalkung hinsichtlich Dicke der Kalkschicht bestimmt werden. Dann kann sozusagen eine Art Vorwarnung als Signal an einen Benutzer ausgegeben werden, damit dieser weiß, wann bzw. wie bald eine Entkalkung stattfinden muss.

Zu Beginn eines Betriebszyklus nach einer Entkalkung kann eine verbliebene Verkalkung bzw. ein sogenannter Kesselstein erkannt und berücksichtigt werden. Diese sind dann wohl kaum noch ablösbar und müssen hingenommen werden, können so aber einkalkuliert werden.

Für eine Erfassung der Werte an den Temperatursensoren der zweiten Art kann gelten, dass diese bei jedem beginnenden Betriebszyklus und/oder in bestimmten Zeitintervallen des Betriebs erfasst werden. Dies kann beispielsweise alle 10 Minuten bis 60 Minuten erfolgen. Erhöht sich der Wert an diesen Temperatursensoren um 0,1% bis 3%, vorteilhaft 0,5% bis 2%, alle 10 Minuten bis 60 Minuten des Betriebs, vorteilhaft alle 20 Minuten bis 40 Minuten, so wird dies als eine langsam zunehmende Verkalkung der Innenseite der Behälterwand erkannt. Dann kann ein entsprechendes Signal an einen Benutzer gegeben werden, beispielsweise auf bekannte Art und Weise optisch und/oder akustisch. Eine sehr lokale Überhitzung, durch was auch immer sie ausgelöst werden würde, würde in aller Regel eine erheblich stärkere und schnellere Erhöhung bewirken, was dann eben ein Zeichen für eine lokale Überhitzung wäre.

Im Falle eines Ausfalls des obersten Heizkreises der Heizeinrichtung, oder wenn dort ein unzulässiger Zustand festgestellt worden wäre und anschließend der oberste Heizkreis abgeschaltet wird, kann die Heizeinrichtung mit den übrigen Heizkreisen darunter weiter betrieben werden. Der oberste Heizkreis ist zwar nicht immer derjenige mit der größten Verkalkung an der Innenseite, aber definitiv derjenige, der am ehesten teilweise oder ganz leergekocht ist, also kein Wasser mehr auf seiner Höhe ist. Dann kann dieser Heizkreis abgeschaltet werden. Da die darunterliegenden Heizkreise aber ggf. noch ausreichend Wasser haben auf ihrer Höhe, kann deren Betrieb weitergehen. Dabei wird ebenfalls eine entsprechende Information über diesen Zustand an einen Benutzer ausgegeben, so dass dieser ggf. eingreifen kann, beispielsweise eine Entkalkung oder eine Reparatur veranlassen kann.

Des Weiteren kann für den Fall vorgesehen sein, dass ein Temperatursensor der ersten Art an dem obersten Heizkreis, der auch noch relativ weit oben an diesem Heizkreis angeordnet ist, eine hohe Temperatur feststellt, dies als Signal für das Nachfüllen von Flüssigkeit in den Behälter angesehen wird. Dieses kann dann automatisch erfolgen über ein Ventil odgl. am Wasserzulauf in den Behälter. Die zugeführte Menge kann aus den geometrischen Verhältnissen am Behälterbereich des obersten Heizkreises bestimmt werden.

Des Weiteren ist es bei einer Ausgestaltung des erfindungsgemäßen Verfahrens möglich, eine Füllstandserkennung im Behälter durchzuführen über Messung der Heizleiterwiderstände. Dafür werden einerseits die temperaturabhängigen Leistungsaufnahmen der Heizkreise und andererseits die Heizelementwiderstände bzw. die Heizelementtemperaturen überwacht, da die Heizelementtemperatur mit dem elektrischen Heizelementwiderstand korreliert ist. Eine so festgestellte Zunahme der Heizelementtemperatur deutet auf einen sinkenden Füllstand des Wassers im Behälter im Bereich des entsprechenden Heizelements und somit des entsprechenden Heizkreises hin. Dies kann genutzt werden, um mehr Wasser einzuleiten bzw. den Füllstand wieder zu erhöhen.

Des Weiteren ist es möglich, eine mittlere Heizelementtemperatur zur Heizelementüberwachung zu nutzen. Dazu liegen die Heizelementwiderstandswerte aller Heizkreise bei Raumtemperatur innerhalb eines zulässigen Toleranzbereichs, also relativ nahe beieinander. Im kalten Zustand vor dem Beginn eines ersten Heizbetriebs werden der Heizelementwiderstand und die dabei vorliegende Temperatur der Flüssigkeit im Behälter in einer Steuerung bestimmt und abgespeichert. Dies gilt für die Heizelemente aller Heizkreise. Der Temperaturkoeffizient der Heizelemente ist vorteilhaft positiv, und bei Raumtemperatur kann dieser Temperaturkoeffizient der Heizelemente in einem Speicher der Steuerung abgespeichert sein.

Alternativ kann der Temperaturkoeffizient beim ersten Aufheizen mithilfe der Temperatursensoren der ersten Art ermittelt werden. Dazu wird der Widerstand bei Raumtemperatur gemessen. Dann wird aufgeheizt, bis die Flüssigkeit eine Temperatur von etwa 50 °C im Behälter aufweist, was über die Temperatursensoren der ersten Art erfasst werden kann. Dann wird das Heizen ausgesetzt und gewartet, bis die Heizelemente die Temperatur der Flüssigkeit aufweisen, was nach üblicherweise 2 sek bis 10 sek der Fall ist. So wird der elektrische Widerstand bei diesen 50 °C gemessen.

6

Anschließend wird weiter aufgeheizt, bis die Flüssigkeit im Behälter 75 °C heiß ist. Dann wird die Heizeinrichtung wieder ausgeschaltet und einige Sekunden gewartet, bis die Heizelemente die Temperatur der Flüssigkeit haben, also 75 °C. Dann kann der Widerstand der Heizelemente bei diesen 75 °C gemessen werden. Dies wird auch noch mit kochender Flüssigkeit, also bei 100 °C, durchgeführt auf dieselbe Art und Weise, um so den Widerstand der Heizelemente bei 100 °C zu erfassen. Aus dem postulierten linearen Verlauf des elektrischen Widerstands der Heizelemente werden mit den gemessenen Wertepaaren des Widerstandes und der Temperatur der Flüssigkeit im Behälter die Kenngrößen des elektrischen Widerstandes, nämlich der Nennwiderstand und der Temperaturkoeffizient bei einer Nenntemperatur von z.B. Raumtemperatur oder von 25°C, für jeden Heizkreis individuell berechnet.

Mit Hilfe des anfänglichen Werts für den Widerstand der Heizelemente bei Raumtemperatur, der anfänglichen Temperatur der Flüssigkeit im Behälter und einem ermittelten typischen Wert für den Temperaturkoeffizienten oder mit Hilfe der vorgenannten Kenngrößen des elektrischen Widerstands und des Temperaturkoeffizienten bei Raumtemperatur bzw. 25 °C für jeden Heizkreis kann dann später anhand des jeweils aktuell im Betrieb ermittelten Heizelementwiderstands die mittlere aktuelle Heizelementtemperatur berechnet werden.

Allgemein kann der elektrische Widerstand des Heizelements mit seinem üblicherweise positiven Temperaturkoeffizienten als eine Art Widerstandsthermometer für die Temperatur des Heizelements verwendet werden. Dann wäre ein Heizelement selber ein Temperatursensor einer dritten Art.

Zum Betrieb der Heizeinrichtung bzw. eines Verdampfers oder Dampfgarers mit mindestens einer solchen Heizeinrichtung, vorteilhaft auch mehreren solcher Heizeinrichtungen, kann bei Beginn dauerhaft mit maximaler Leistung bis zum Erreichen der Siedetemperatur des Wassers gearbeitet werden. Dies ist das Ankochen bzw. ein sogenannter Boost-Betrieb. Wenn dann das Wasser in der mindestens einen Heizeinrichtung kocht bzw. Dampf in größeren Mengen erzeugt wird, können die Heizkreise in einem sogenannten Verdampfer-Betrieb gepulst betrieben werden über eine Pulsweitenmodulation. Dies ist vor allem dann vorteilhaft, wenn nur eine bestimmte Menge von zulaufendem Wasser erwärmt und verdampft werden muss bzw. im Wesentlichen nur die Verdampfungstemperatur gehalten werden muss. Dann wird eine deutlich geringere Leistung als die maximale Leistung benötigt.

Des Weiteren ist es für einen effizienten Energieeinsatz möglich, in einem Niedrigenergie-Betrieb nur zwei von drei Heizkreisen zu betreiben, und dann dauerhaft. Mit den vorbeschriebenen Möglichkeiten zur Unterteilung der Heizelemente der Heizkreise untereinander mit Teil-Leistungen ist eine nochmals feinere Abstufung einer Leistungseinstellung möglich. In ähnlicher Form kann in einem Notbetrieb, wenn ein Heizkreis ausgefallen ist oder aufgrund daran festgestellter überhöhter Temperatur abgeschaltet werden muss, mit den anderen beiden Heizkreisen weitergeheizt werden. Insbesondere kann dabei der oberste Heizkreis abgeschaltet werden, wenn Energie gespart werden soll und nicht die maximale Menge an Dampf benötigt wird. So kann hier die Füllstandshöhe im Behälter auf etwa zwei Drittel reduziert werden bzw. der Füllstand so hoch sein, wie die beiden unteren Heizkreise reichen. Dabei sollte nach Möglichkeit der Füllstand so eingestellt werden, dass er im Bereich eines betriebenen Heizkreises liegt. Wenn also ein mittlerer von drei Heizkreisen abgeschaltet werden muss, so sollten der unterste und der oberste Heizkreis arbeiten. Muss der unterste Heizkreis abgeschaltet werden, sollten die oberen beiden Heizkreise arbeiten. In beiden Fällen ist der Füllstand bis in etwa auf die obere Höhe des obersten Heizkreises einzustellen.

Muss dagegen der oberste Heizkreis abgeschaltet werden oder kann er aufgrund geringerer benötigter Menge an Dampf abgeschaltet werden, so kann und sollte der Füllstand auf Höhe des oberen Bereichs des mittleren Heizkreises abgesenkt werden.

Es ist möglich, einen Verlauf der Spannung des Temperatursensors der zweiten Art über einer Dicke einer Kalkschicht an dem Behälter in einem Speicher abzuspeichern, und zwar einerseits aufgrund von ermittelten Messwerten. Durch Heranziehen von erfassten Werten der Spannung des Temperatursensors der zweiten Art kann dann anhand der abgespeicherten Messwerte eine Dicke der Kalkschicht bestimmt werden. Andererseits kann eine Dicke der Kalkschicht berechnet werden mit einer Formel, die aus einer abgespeicherten Kurve abgeleitet ist, wobei die Dicke ausgehend von einer gemessenen Spannung des Temperatursensors der zweiten Art mit der Formel genau berechnet wird.

KURZBESCHREIBUNG DER ZEICHNUNGEN

Ausführungsbeispiele der Erfindung, sind in den Zeichnungen schematisch dargestellt und werden im Folgenden näher erläutert. In den Zeichnungen zeigen:

Fig. 1     eine Draufsicht auf eine erfindungsgemäße Heizeinrichtung mit drei übereinander angeordneten Heizkreisen und Temperatursensoren,

Fig. 2     mehrere Verdampfermodule auseinandergezogen und im Schnitt, in die jeweils eine Heizeinrichtung aus Fig. 1 eingebaut ist,

Fig. 3     die drei Verdampfermodule aus Fig. 2 im Schnitt zusammengebaut als erfindungsgemäßer Verdampfer,

Fig. 4     einen erfindungsgemäßen Dampfgarer mit einem Verdampfer entsprechend Fig. 3 mit mehreren Heizeinrichtungen entsprechend Fig. 1,

Fig. 5    eine Draufsicht auf eine abgewickelte Variante eines Heizkreises mit mäanderförmigen Teil-Heizkreisen und Heizelementen in zwei unterschiedlichen Breiten und

Fig. 6    die Abhängigkeit der Spannung an einem Temperatursensor der zweiten Art über einer Dicke einer Kalkschicht an der Innenseite des Behälters.

## DETAILLIERTE BESCHREIBUNG DER AUSFÜHRUNGSBEISPIELE

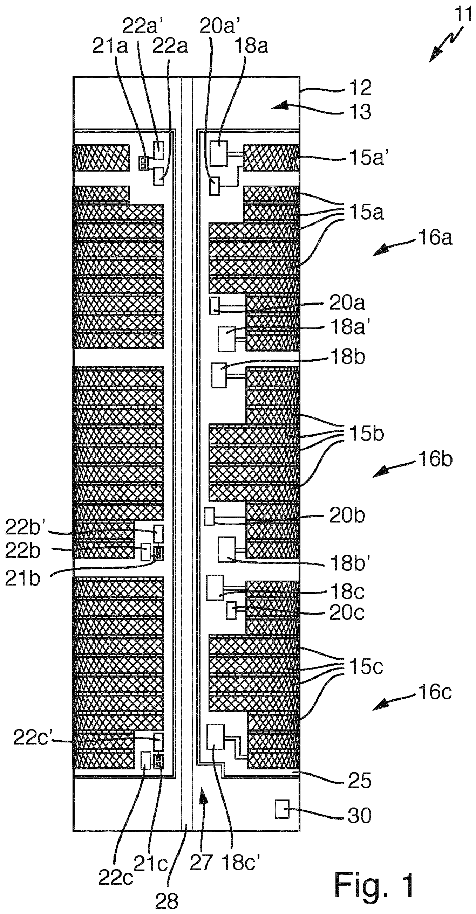

In der Fig. 1 ist eine aufrecht stehende erfindungsgemäße Heizeinrichtung 11 dargestellt, die einen rundzylindrischen rohrartigen Behälter 12 aus Metall aufweist. An einer Außenseite 13 des Behälters 12 sind streifenartig ausgebildete Heizelemente 15 vorgesehen, die, wie dargestellt, entlang etwa 75% bis 90% des Außenumfangs des Behälters 12 verlaufen bzw. umlaufen. Obere Heizelemente 15a und das oberste Heizelement 15a' bilden einen oberen Heizkreis 16a. Mittlere Heizelemente 15b bilden einen mittleren Heizkreis 16b, und untere Heizelemente 15c bilden einen unteren Heizkreis 16c. Dabei sind die mittleren Heizelemente 15b des mittleren Heizkreises 16b und die unteren Heizelemente 15c des unteren Heizkreises 16c sowie die Heizkreise 16b und 16c identisch zueinander ausgebildet. Der obere Heizkreis 16a ist insofern unterschiedlich, als dass hier das oberste Heizelement 15a' mit einem Abstand von etwa 60% einer Breite der normalen Heizelemente 15a darüber verläuft, also erhöhten Abstand aufweist. Zusätzlich ist dieses oberste Heizelement 15a' etwas breiter ausgebildet als die anderen Heizelemente 15a des oberen Heizkreises 16a, wodurch es sowohl mehr Fläche der Außenseite 13 beheizt als auch einen geringeren Widerstandswert aufweist und somit weniger Heizleistung aufweist bzw. vor allem weniger Flächenleistung.

Elektrisch kontaktiert sind die Heizkreise 16a bis 16c über Kontaktfelder 18, und zwar der obere Heizkreis 16a über die Kontaktfelder 18a und 18a'. Der mittlere Heizkreis 16b weist die Kontaktfelder 18b und 18b' auf, und der untere Heizkreis 16c die Kontaktfelder 18c und 18c'. Des Weiteren sind noch Zusatzkontakte 20a' sowie 20a bis 20c vorgesehen, und zwar für den mittleren Heizkreis 16b bzw. den unteren Heizkreis 16c jeweils ein Zusatzkontakt 20b bzw. 20c. Der obere Heizkreis 16a weist einen Zusatzkontakt 20a auf mit einer Anordnung ähnlich wie beim mittleren Heizkreis 16b. Am obersten Heizelement 15a' ist noch ein weiterer Zusatzkontakt 20a' vorgesehen.

Anhand der Fig. 1 ist auch leicht die vorgenannte Abwandlung vorstellbar, dass beispielsweise der oberste Heizkreis 16a in der Höhe in einen oberen Teil-Heizkreis mit 4 oder 5 der Heizelemente 15a und in einen unteren Teil-Heizkreis mit 5 oder 6 der Heizelemente 15a aufgeteilt ist. Dies entspricht dann quasi der Anordnung der Heizkreise 16a und 16b, wenn man diese als Teil-Heizkreise ansehen würde. Dazu brauchen die Abstände nicht verändert zu werden, nur die Ansteuerung aufgeteilt werden über mehr Kontaktfelder 18, was aber kein Problem darstellt.

Unter Umständen kann auch der mittlere Heizkreis 16b eine solche Aufteilung aufweisen. So ist durch Teil-Leistungen eine feiner unterteilte Leistungsaufteilung als nur durch Abschalten ganzer Heizkreise möglich.

Im linken Bereich sind an den Heizkreisen 16a bis 16c SMD-Temperatursensoren 21a bis 21c vorgesehen, die die Temperatursensoren der ersten Art bilden, wie sie eingangs beschrieben worden sind. Für jeden SMD-Temperatursensor 21a bis 21c sind zwei Temperatursensor-Kontaktfelder 22a und 22a', 22b und 22b' sowie 22c und 22c' vorgesehen. Sie sind elektrisch völlig von den Heizkreisen 16a bis 16c getrennt. Dabei fällt auf, dass eben bezüglich des oberen Heizkreises 16a der zugehörige SMD-Temperatursensor 21a im obersten Bereich bzw. auf Höhe des obersten Heizelements 15a' angeordnet ist. Bei den anderen beiden Heizkreisen 16b und 16c ist deren Anordnung im untersten Bereich.

Auf der Außenseite 13 des Behälters 12 ist eine vorbeschriebene dielektrische Isolationsschicht aufgebracht, und zwar direkt auf die metallische Außenseite. Die dielektrische Isolationsschicht bildet einen wesentlichen Teil der Temperatursensoren der zweiten Art, wie sie eingangs beschrieben worden sind. Es ist zu ersehen, dass in der Mitte des Behälters 12 entlang seiner Längsachse ein Streifenbereich 27 vorgesehen ist, an dem die dielektrische Isolationsschicht 25 ausgespart ist. In dem genannten Streifenbereich 27 verläuft eine Schweißnaht 28, da der rohrförmige Behälter 12 aus einem Blech geformt ist und die aneinanderliegenden Kanten eben miteinander verschweißt sind. Die Isolationsschicht 25 weist einen gewissen Abstand zur Unterkante und zur Oberkante des Behälters 12 auf, beispielsweise zwischen 5% und 15% der Länge des Behälters 12. So verläuft sie im Wesentlichen nur unterhalb der Heizelemente 15 bzw. der Heizkreise 16.

Wie eingangs erläutert worden ist, ist es entweder möglich, die gesamte dielektrische Isolationsschicht 25 homogen bzw. aus demselben Material oder Glas herzustellen. Alternativ können aber auch zwei unterschiedlich leitfähige Materialien bzw. Gläser verwendet werden. Diese können sogar übereinander und/oder aufeinander aufgebracht werden, wobei sie jeweils einzeln kontaktiert werden müssen.

Unten ist an dem Behälter 12 ein sogenannter Außenseitenkontakt 30 angebracht, und zwar direkt auf den metallischen Behälter 12 bzw. dessen Außenseite 13. Da die dielektrische Isolationsschicht 25 auf diese Außenseite 13 aufgebracht ist, und auf sie wiederum die Heizelemente 15 aufgebracht sind, kann gemäß obenstehender Funktionsbeschreibung sowie der Funktionen gemäß der vorgenannten DE 102013200277 A1 der Aufbau der Temperatursensoren der zweiten Art erläutert werden. Die Isolationsschicht 25 bildet sozusagen einen flächigen, temperaturabhängigen elektrischen Widerstand, der bei Temperaturen bis etwa 80 °C, wobei diese Temperatur einstellbar ist, einen sehr hohen elektrischen Widerstand aufweist und somit kein Strom über die Isolationsschicht fließt. Ein solcher Strom kann einerseits an dem Außenseitenkontakt 30 erfasst werden und andererseits, um quasi verschiedene Bereiche zu unterscheiden, mittels der Zusatzkontakte 20a' und 20a bis 20c im Bereich des obersten Heizelements 15a' oder der drei Heizkreise 16a bis 16c. Die Heizelemente können hier dann als Elektrode dienen. Steigt die Temperatur auch nur in einem kleinen Bereich weiter an und erreicht sie beispielsweise 100 °C, so nimmt der elektrische Widerstand ab. Bei Temperaturen von beispielsweise 150 °C kann der Widerstand in diesem kleinen Bereich so weit abgenommen haben, dass zwar noch die elektrischen Isolationseigenschaften ausreichend gegeben sind, um die Heizkreise 16a bis 16c problemlos auf dem metallischen Behälter 12 zu betreiben. Es kann aber schon ein fließender Strom bzw. Leckstrom sicher erfasst werden, der im Bereich dieser Temperaturen fließen kann. Eine genaue Bestimmung eines solchen lokal überhitzten kleinen Bereichs ist nicht punktgenau möglich, aber immerhin in dem Bereich, in dem die von einem Zusatzkontakt 20a' bzw. 20a bis 20c kontaktierten Heizelemente 15a' bzw. Heizkreise 16a bis 16c verlaufen.

Zu derart hohen und deutlich über 100 °C liegenden Temperaturen kann es beim Betrieb der Heizeinrichtung 11 bzw. eines damit versehenen Verdampfers und beim Verdampfen von Wasser eigentlich nur dann kommen, wenn einerseits kein Wasser mehr vorhanden ist oder andererseits durch starke Verkalkung an einer Stelle die Wärmeabnahme nicht mehr groß genug ist, so dass es zu der Überhitzung kommt. In dem ersten Fall, dass sich in einem solchen Bereich allgemein kein Wasser mehr befindet, kann eine Gegenkontrolle vorgenommen werden mit dem Zustand des jeweiligen SMD-Temperatursensors 21a bis 21c, vor allem des obersten Temperatursensors 21a. Stellt dieser auch eine Temperatur von über 100 °C fest, so ist offensichtlich der Füllstand des Wassers abgesunken. Stellt aber gerade der oberste SMD-Temperatursensor 21a noch eine Temperatur von maximal 100 °C fest, so liegt eine deutlich höhere, von einem Temperatursensor der zweiten Art zusammen mit der Isolationsschicht 25 und den Zusatzkontakten 20 festgestellte höhere Temperatur an einer zu starken Verkalkung an der Innenseite des Behälters 12 vor. Je nach Umfang des flächigen Bereichs und nach Höhe der Übertemperatur kann der entsprechende Heizkreis 16 weiterbetrieben werden oder aber abgeschaltet werden. In jedem Fall kann eine eingangs beschriebene Signalisierung an eine Bedienperson erfolgen, um darauf aufmerksam zu machen, dass die Heizeinrichtung 11 bzw. der Verdampfer entkalkt werden muss.

Eine Aussage zur Verkalkung der Heizelemente bzw. Heizkreise ist mit der Auswertung der beiden Arten von Temperatursensoren möglich. Somit kann festgestellt werden ob eine einheitliche bzw. gleichmäßige Verkalkung der Heizelemente vorliegt, also eine geometrisch in etwa gleich verteilte Verkalkung. Wenn keine gleichmäßige Verkalkung der Heizelemente vorliegt kann durch unterschiedliches Schalten der Heizelemente im Betrieb eine einheitliche Verkalkung herbeigeführt werden, also dort stärker, wo sie bislang noch nicht so stark war. Beim Betrieb des Gerätes kann die verbleibende Zeit bis zur nächsten notwendigen Entkalkung durch den Benutzer oder einen Servicetechniker angezeigt werden.

Das oberste Heizelement 15a' könnte sich auch sozusagen über zwei oder mehr Bahnen erstrecken, um damit bzw. mit dem Temperatursensor der zweiten Art über den Zusatzkontakt 20a', der dann über diesen obersten Bahnen des Heizelements 15a' verläuft, eine Füllstandserkennung durchzuführen. Sie kann sogar über das komplette obere Heizelement 15 durchgeführt werden. Hierzu müsste die gesamte Fläche des oberen Heizelementes vergrößern werden, eine Gesamtleistung von beispielsweise 3 kW würde beibehalten werden.

Das Einlassen von Wasser nach einem teilweisen Leerkochen ist mit dem SMD-Temperatursensor 21a des ersten Heizkreises 16a erkennbar. Erreicht der Stand des frisch eingelassenen Wassers nämlich die Position des SMD-Temperatursensors 21a kann es an dem entstehenden Temperaturabfall erkannt werden. Hier ist es denkbar, dass mit einem weiteren Temperatursensor im Zulauf die Menge des eingelassenen Wassers über ein vorhandenes delta T bestimmt werden kann. Das Einlassen von Frischwasser von unten während des Heiz-/Verdampferbetriebes kann mit dem Temperatursensor 21c des unteren Heizkreises 16c erkannt werden. Das Wassergemisch aus erwärmtem und frisch zugeführtem Wasser hat nämlich eine niedrigere Temperatur, ein Temperaturabfall am Temperatursensor 21c kann so erkannt werden, wobei durch eine entsprechende Führung des eingelassenen Wassers der Behälterwandbereich des Temperatursensor 21c angeströmt werden kann, um einen Temperaturabfall am Temperatursensor 21c gut zu erkennen. Damit kann die ordnungsgemäße Funktion einer Frischwasserzuführung überwacht werden.

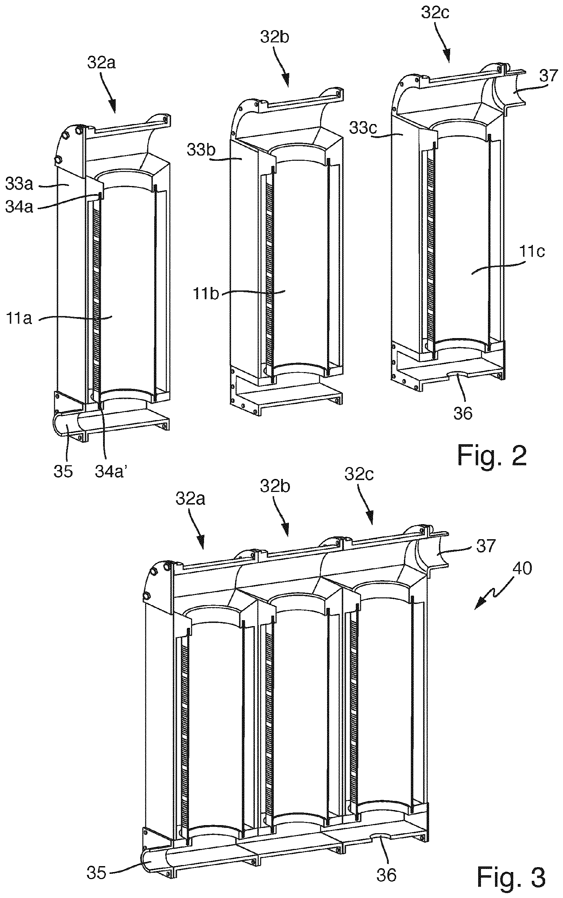

In der Fig. 2 sind drei einzelne Verdampfermodule 32a bis 32c im Schnitt mit einer Schnittfläche an der sichtbaren Vorderseite dargestellt. Jedes Verdampfermodul 32a bis 32c weist ein Modulgehäuse 33a bis 33c auf. Mittels Dichtungen 34a bis 34c und 34a' bis 34c' sind in jedes der Verdampfermodule 32a bis 32c Heizeinrichtungen 11a bis 11c entsprechend Fig. 1 eingesetzt. Unterhalb der Heizeinrichtungen 11a bis 11c verläuft durch die Modulgehäuse 33a bis 33c ein Wassereinlass 35 ganz links hin zu einem Wasserauslass 36 ganz rechts. Oben kann der in allen Verdampfermodulen 32a bis 32c gesammelte Dampf an einen Dampfauslass 37 abgeführt werden.

Die Fig. 3 zeigt einen Verdampfer 40, der aus den drei zusammengesetzten Verdampfermodulen 32a bis 32c der Fig. 2 besteht. Er weist also drei Heizeinrichtungen 11a bis 11c auf und ist somit für eine hohe gesamte Verdampferleistung ausgebildet.

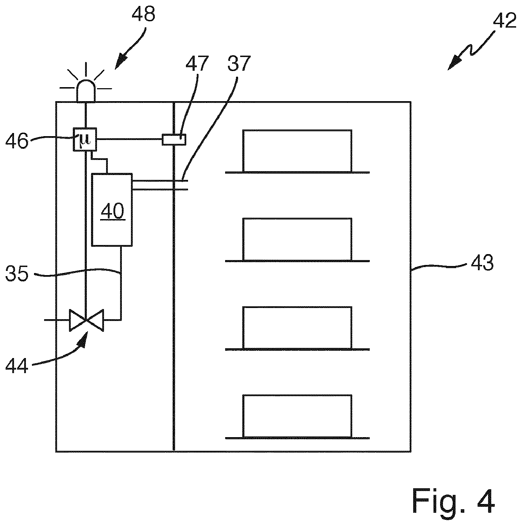

In der Fig. 4 ist ein erfindungsgemäßer Dampfgarer 42 dargestellt mit einem Garraum 43, wie er üblich ausgebildet ist, beispielsweise in Schrankgröße. Im linken Bereich des Dampfgarers 42 ist der Verdampfer 40 der Fig. 3 angeordnet, hier schematisch dargestellt. Über ein Einlassventil 44 wird am Wassereinlass 35 Frischwasser zugeführt in genau bestimmter Menge. Entstehender Dampf wird an dem Dampfauslass 37 ausgelassen und in den Garraum 43 eingebracht.

Der Verdampfer 40 weist eine Steuerung 46 auf, die auch die Steuerung des gesamten Dampfgarers 42 sein kann, oder aber mit einer solchen verbunden sein kann. Die Steuerung 46 steuert einerseits das Einlassventil 44. Des Weiteren ist sie mit dem Verdampfer 40 verbunden bzw. mit sämtlichen Anschlüssen bzw. Kontaktfeldern und Zusatzkontakten sowie dem Außenseitenkontakt der Heizeinrichtung 11 der Fig. 1. Darüber hinaus weist die Steuerung 46 einen Temperaturfühler 47 im Garraum 43 auf, wobei es auch mehrere Temperaturfühler sein können. Zusätzlich können auch Dampfsensoren vorgesehen sein, die das Vorhandensein von Dampf im Garraum 43 sowie dessen Menge und beispielsweise auch dessen Sättigungsgrad erfassen können.

Zusätzlich ist die Steuerung 46 mit einer Signallampe 48 am Dampfgarer 42 versehen als beispielhafte grundsätzliche Möglichkeit, an einen Benutzer etwas zu signalisieren. Alternativ zu einer solchen sehr einfachen Signallampe 48 kann ein Display am Dampfgarer 42 vorgesehen sein, beispielsweise auch ein Touch-Display zur Ausgabe von Informationen und Betriebszuständen und zur Eingabe von Befehlen.

Die Temperaturerfassung mittels der Temperatursensoren der zweiten Art bzw. die Überwachung der Temperatur der Heizelemente kann mit Kleinspannung bzw. Schutzkleinspannung sowie mit Wechselspannung oder Gleichspannung erfolgen, beispielsweise kleiner 50 V oder sogar kleiner 25 V bei Wechselspannung und kleiner 120 V oder sogar kleiner 60 V bei Gleichspannung.

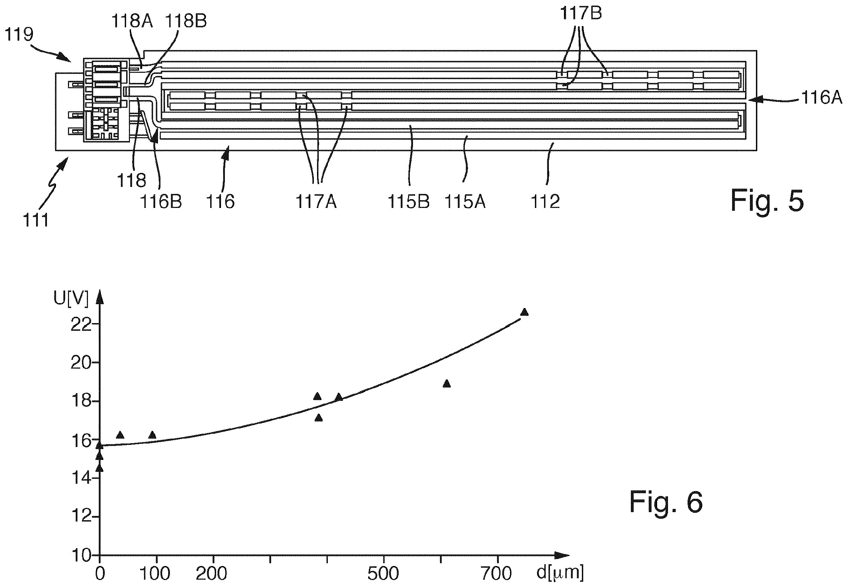

In der Fig. 5 ist in der Draufsicht ein Ausschnitt auf eine Heizeinrichtung 111 in einer weiteren Abwandlung dargestellt. Auf einen Behälter 112 als Träger ist ein Heizkreis 116 aufgebracht. Es sind hier zwei Arten von Heizelementen vorgesehen, nämlich zum einen Heizelemente 115A und zum anderen Heizelemente 115B. Dabei sind die Heizelemente 115B erkennbar breiter ausgebildet als die Heizelemente 115A, beispielsweise 20% breiter. Die Heizelemente 115A bilden einen Teil-Heizkreis 116A, die Heizelemente 115B bilden einen Teil-Heizkreis 116B. Beide Teil-Heizkreise 116A und 116B verlaufen mäanderförmig ineinander, so dass sie letztlich dieselbe Fläche beheizen, wenn sie einzeln betrieben werden, im gemeinsamen Betrieb ohnehin. Damit ist sozusagen eine unterschiedliche Aufteilung der Heizleistung des Heizkreises 116 in sich möglich. Bei maximaler gewünschter Heizleistung werden beide Teil-Heizkreise 116A und 116B betrieben. Bei minimaler gewünschter Heizleistung wird nur einer der beiden Teil-Heizkreise 116 betrieben, und zwar der Teil-Heizkreis 116A mit den schmaleren Heizelementen bzw. Leitern, die einen höheren Widerstand aufweisen, elektrisch in Reihe geschaltet sind und somit weniger Heizleistung erzeugen. Bei einer dazwischen liegenden gewünschten Heizleistung wird der Teil-Heizkreis 116B betrieben, der eine größere Heizleistung erzeugt. Die Teil-Heizkreise 116A und 116B können wie beschrieben parallel oder separat, aber auch in Serie betrieben werden. So ist eine Aufteilung der Heizleistung in 100%, knapp 60%, etwas über 40% und 0% möglich.

Beide Teil-Heizkreise 116A und 116B weisen die gleiche Länge und im Heizkreis 116 jeweils vier Längsabschnitte auf. Beide Teil-Heizkreise 116A und 116B weisen auch an zwei nebeneinanderliegenden Längsabschnitten auf bekannte Art und Weise Unterbrechungen 117A und 117B durch Kontaktbrücken auf. Damit kann lokal die Heizleistung etwas gesenkt werden.

Eine elektrische Kontaktierung der Teil-Heizkreise 116A und 116B erfolgt über die einzelnen Kontaktfelder 118A und 118B sowie ein gemeinsames Kontaktfeld 118. Schematisch zu erkennen ist auch ein Steckanschluss 119, der auf den Kontaktfeldern 118 bzw. auf den Behälter 112 aufgebracht ist, vorteilhaft gemäß der EP 1152639 A2.

Anhand dieses Ausführungsbeispiels der Fig. 5 wird also veranschaulicht, wie sowohl die Heizelemente 115A als auch die Heizelemente 115B jeweils eben seriell in Reihe verschaltet sind, während sie bei dem Ausführungsbeispiel der Fig. 1 jeweils parallel geschaltet sind. Des Weiteren kann die Mäanderform ersehen werden, die dann vorteilhaft bzw. unter Umständen sogar notwendig ist, um die gewünschte Länge überkreuzungsfrei unterzubringen. Schließlich kann der Fig. 5 noch entnommen werden, dass pro Teil-Heizkreis unterschiedlich ausgebildete Heizelemente, die unterschiedliche Leistungseigenschaften aufweisen bzgl. Gesamtleistung und/oder Flächenleistung, vorgesehen sein können. Dadurch ist eine nochmals feinere Abstufung der insgesamt erzeugten Heizleistung pro Heizkreis möglich, was mit identisch ausgebildeten einzelnen Heizelementen nicht möglich wäre. Hier könnte auch ein vorgenannter Zusatz-Heizleiterkontakt beispielsweise an der Stelle über dem gemeinsamen Kontaktfeld 118 an das Heizelement 115B bzw. an den Teil-Heizkreis 116B in etwa in seiner Mitte vorgesehen sein. So ist eine nochmalige Aufteilung in zwei Teil-Heizelemente bzw. Teil-Heizkreise möglich, die unabhängig voneinander angesteuert werden können über die Kontaktfelder 118B und 118 als vorgenannte End-Heizleiterkontakte und eben den Zusatz-Heizleiterkontakt. Dies kann durch vorgenannten separaten, parallelen oder seriellen Betrieb zur nochmals feineren Unterteilung einer Heizleistung dienen.

In der Fig. 6 ist die Abhängigkeit der Spannung an einem Temperatursensor der zweiten Art über die im Zusammenhang mit Fig. 1 beschriebene dielektrische Isolationsschicht auf der Y-Achse über einer Dicke einer Kalkschicht an der Innenseite des Behälters 12 auf der X-Achse aufgezeichnet. Aus den durch Dreieck-Symbole darstellten einzelnen Werten bei bestimmten Dicken der Kalkschicht kann eine angenäherte Funktion angegeben werden mit:

$$Y = (9E - 06)X^2 + 0{,}002X + 15{,}357; \quad R^2 = 0{,}9162.$$

Gemessene Werte entsprechend der Dreieck-Symbole können entweder in einer Tabelle in einem Speicher abgelegt sein, vorteilhaft durchgehende Werte über einen großen Bereich der möglichen Schichtdicke, und daraus dann anhand einer gemessenen Spannung an einem Temperatursensor der zweiten Art eine vorgegebene Dicke der Kalkschicht bestimmt werden. Vorteilhaft wird mit der vorgenannten Funktion die Dicke der Kalkschicht bei einer bestimmten Spannung an einem Temperatursensor der zweiten Art direkt berechnet. Daraus können dann je nach Betrieb Handlungsanweisungen für den Betrieb der Heizeinrichtung abgeleitet werden, beispielsweise mit einer Aufforderung an eine Bedienperson zum baldigen Entkalken, zum sofortigen Entkalken oder zur Reduzierung der erzeugbaren Heizleistung.

**Patentansprüche**

1.  Heizeinrichtung (11) zum Erhitzen von Flüssigkeiten und/oder zum Verdampfen von Flüssigkeiten für ein Elektrogargerät (42), aufweisend:

    - einen Behälter (12) für die Flüssigkeit,
    - der Behälter (12) weist eine Höhe auf, die größer ist als seine Breite,
    - an einer Außenseite (13) einer seitlichen Behälterwand sind flächig verteilte Heizelemente (15) angeordnet,
    - mindestens drei separate und/oder separat betreibbare Heizkreise (16), wobei jeder Heizkreis mindestens ein Heizelement (15) aufweist,
    - mehrere Temperatursensoren (21, 25) an der Außenseite (13) der Behälterwand,
    - die mehreren Temperatursensoren (21, 25) sind in mindestens zwei Arten vorhanden, wobei mindestens ein Temperatursensor einer ersten Art (21) ein diskretes Bauteil ist, das auf die Außenseite (13) der Behälterwand aufgesetzt ist, und wobei mindestens ein Temperatursensor einer zweiten Art (25) als flächige Beschichtung an der Außenseite (13) der Behälterwand aufgebracht ist,
    **gekennzeichnet durch**
    - in Höhenerstreckung des Behälters (12) ist jeder Heizkreis (16) von den anderen Heizkreisen beabstandet,
    - jeder Heizkreis (16) bedeckt einen Höhenbereich der Außenseite (13) der Behälterwand.

2.  Heizeinrichtung nach Anspruch 1, **dadurch gekennzeichnet, dass** pro Heizkreis (16) mindestens ein Temperatursensor der ersten Art (21) vorgesehen ist, vorzugsweise genau ein einziger Temperatursensor der ersten Art, wobei insbesondere der Temperatursensor der ersten Art im Bereich und entlang einer Längsachse des Behälters (12) auf Höhenniveau des jeweiligen Heizkreises vorgesehen ist, wobei vorzugsweise ein Abstand eines Temperatursensors der ersten Art (21) zu einem nächstgelegenen Heizelement (15) zwischen dem zweifachen und dem zwanzigfachen der Dicke der Behälterwand liegt.

3.  Heizeinrichtung nach Anspruch 1 oder 2, **dadurch gekennzeichnet, dass** für den Temperatursensor der zweiten Art (25) auf der Außenseite (13) der Behälterwand eine dielektrische Isolationsschicht aufgebracht ist und über der dielektrischen Isolationsschicht die Heizelemente (15) eines Heizkreises (16) aufgebracht sind, wobei über den Heizelementen eine Abdeckschicht vorgesehen ist, wobei eine Messelektrode (30) vorgesehen ist auf der Abdeckschicht, wobei eine Messeinrichtung sowohl mit der Messelektrode als auch mit den Heizelementen (15) verbunden ist und ausgebildet ist zur Erfassung eines Stromflusses zwischen den Heizelementen und der Messelektrode zur Auswertung als Maß für eine Temperaturänderung an dem Heizkreis bzw. an dem Behälter (12) im Bereich nahe dem Heizkreis, wobei vorzugsweise die Isolationsschicht direkt auf die Außenseite (13) der Behälterwand aufgebracht ist und einen Großteil von deren gesamter Oberfläche bedeckt, insbesondere mindestens 90%, vorzugsweise eine einzige durchgehende Isolationsschicht unter allen Heizelementen (15).

4.  Heizeinrichtung nach Anspruch 3, **dadurch gekennzeichnet, dass** auf der Isolationsschicht eine weitere Zusatz-Isolationsschicht aufgebracht ist, insbesondere als Zwischen-Glasschicht, wobei vorzugsweise die Heizelemente (15) auf die Zusatz-Isolationsschicht aufgebracht sind.

5.  Heizeinrichtung nach Anspruch 3 oder 4, **dadurch gekennzeichnet, dass** die Messelektrode (30) und die Heizelemente (15) in unterschiedlichen Schichten verlaufen, vorzugsweise mit der Isolationsschicht und/oder einer Abdeckschicht dazwischen, wobei insbesondere die Messelektrode flächig ausgebildet ist und im Wesentlichen die Heizelemente überdeckt.

**6.** Heizeinrichtung nach einem der vorhergehenden Ansprüche, **dadurch gekennzeichnet, dass** pro Heizkreis (16) mindestens ein Temperatursensor der zweiten Art (25) vorgesehen ist, vorzugsweise genau ein Temperatursensor der zweiten Art, wobei der Temperatursensor der zweiten Art mindestens 50% der Fläche der Heizelemente (15) des zugehörigen Heizkreises (16) bedeckt, insbesondere 90% bis 100%.

**7.** Heizeinrichtung nach einem der vorhergehenden Ansprüche, **dadurch gekennzeichnet, dass** zumindest die beiden untersten Höhenbereiche gleich hoch sind und insbesondere der oberste Höhenbereich maximal 20% höher ist.

**8.** Heizeinrichtung nach einem der vorhergehenden Ansprüche, **dadurch gekennzeichnet, dass** die beiden untersten Heizkreise (16b, 16c) bzgl. ihrer Heizelemente (15b, 15c) identisch ausgebildet sind, insbesondere auch bzgl. der Anordnung eines Temperatursensors der ersten Art (21) und/oder der zweiten Art (25) an dem jeweiligen Heizkreis.

**9.** Heizeinrichtung nach einem der vorhergehenden Ansprüche, **dadurch gekennzeichnet, dass** bei den beiden untersten Heizkreisen (16b, 16c) der Temperatursensor der ersten Art (21b, 21c) in deren unterem Bereich angeordnet ist, insbesondere in den untersten maximal 10% des Höhenbereichs, wobei der Temperatursensor der ersten Art (21a) des obersten Heizkreises (16a) in dem oberen Höhenbereich dieses Heizkreises angeordnet ist, vorzugsweise in den obersten maximal 15%.

**10.** Heizeinrichtung nach einem der vorhergehenden Ansprüche, **dadurch gekennzeichnet, dass** das oberste Heizelement (15a') des obersten Heizkreises (16a) einen größeren Abstand zu dem benachbarten darunter liegenden Heizelement (15a) aufweist als dieses benachbarte darunterliegende Heizelement zu dem nächsten Heizelement und die anderen Heizelemente (15a) dieses Heizkreises (16a) darunter zueinander, wobei vorzugsweise der Abstand zwischen 20% und 90% einer Breite des Heizelements entspricht.

**11.** Heizeinrichtung nach einem der vorhergehenden Ansprüche, **dadurch gekennzeichnet, dass** bei einem Heizkreis (16) Heizelemente (15) in mindestens zwei unterschiedlichen Ausgestaltungen vorgesehen sind, wobei sich die Heizelemente bzgl. elektrischer Leistung, Länge, Breite und/oder Dicke unterscheiden, vorzugsweise nur bzgl. eines dieser vorgenannten Kriterien und nicht bzgl. der anderen vorgenannten Kriterien, wobei sich insbesondere die zwei Heizelemente in mindestens zwei unterschiedlichen Ausgestaltungen bzgl. ihrer Breite unterscheiden.

**12.** Heizeinrichtung nach einem der vorhergehenden Ansprüche, **dadurch gekennzeichnet, dass** die Heizelemente (15) als Heizleiter in Bahnform ausgebildet sind und parallel zueinander verlaufen, wobei mehrere Heizelemente einen Heizkreis (16) oder Teil-Heizkreise bilden, die separat voneinander ansteuerbar sind und parallel zueinander geschaltet sind.

**13.** Heizeinrichtung nach einem der Ansprüche 1 bis 11, **dadurch gekennzeichnet, dass** die Heizelemente (15) als Heizleiter in Bahnform ausgebildet sind und parallel zueinander verlaufen, wobei mehrere Heizelemente als Bahnen seriell zusammen geschaltet sind und insbesondere mäanderförmig verlaufen, wobei vorzugsweise zwei Heizelemente eines gemeinsamen Heizkreises (16) Teil-Heizkreise bilden und mehrere mäanderförmig ineinander verlaufende Heizleiter in Bahnform aufweisen.

**14.** Verdampfer (40) für ein Elektrogargerät (42) mit einer Heizeinrichtung (11) zum Erhitzen und Verdampfen von Wasser, **dadurch gekennzeichnet, dass** die Heizeinrichtung nach einem der vorhergehenden Ansprüche ausgebildet ist.

**15.** Verfahren zum Betrieb einer Heizeinrichtung (11) nach einem der Ansprüche 1 bis 13, **dadurch gekennzeichnet, dass** die Temperatursensoren der ersten Art (21) und der zweiten Art (25) ausgewertet werden, um ein Ereignis aus der folgenden Gruppe festzustellen:

    - zunehmende Verkalkung an einer Innenseite der Behälterwand,
    - lokal begrenzte Überhitzung an der Innenseite der Behälterwand,
    - Absinken einer Füllstandshöhe von Wasser in dem Behälter (12) unter den obersten Heizkreis (16a),
    - Abfallen der Füllstandshöhe von Wasser in dem Behälter (12) unter ein oberstes Heizelement (15a) des obersten Heizkreises (16a).

**16.** Verfahren nach Anspruch 15, **dadurch gekennzeichnet, dass** ein elektrischer Widerstand der Heizkreise (16) überwacht und ausgewertet wird im zeitlichen Verlauf um eine großflächige Verkalkung an der Innenseite der Behälterwand zu erkennen, wobei vorzugsweise diese Auswertung verglichen wird mit einer Auswertung der Temperatursensoren der zweiten Art (25) als flächige Temperaturerfassung, wobei insbesondere ein Verlauf der Spannung des Temperatursensors der zweiten Art über einer Dicke einer Kalkschicht an dem Behälter (12) in einem Speicher abgespeichert ist oder berechnet wird mit einer Formel, die aus einer abgespeicherten Kurve abgeleitet ist, wobei ausgehend von einer gemessenen Spannung des Temperatursensors der zweiten Art (25) die Dicke einer Kalkschicht an dem Behälter mit der Formel berechnet wird.

**17.** Verfahren nach Anspruch 15 oder 16, **dadurch gekennzeichnet, dass** eine Erfassung der Werte an den Temperatursensoren der zweiten Art (25) bei jedem beginnenden Betriebszyklus und/oder in bestimmten Zeitintervallen des Betriebs, vorzugsweise 10 Minuten bis 60 Minuten, erfolgt, wobei insbesondere bei einer Erhöhung um 0,1% bis 3% alle 10 Minuten bis 60 Minuten des Betriebs eine Verkalkung der Innenseite der Behälterwand erkannt wird und ein entsprechendes Signal an einen Benutzer gegeben wird.

**18.** Verfahren nach einem der Ansprüche 15 bis 17, **dadurch gekennzeichnet, dass** im Falle eines Ausfalls des obersten Heizkreises (16a) der Heizeinrichtung (11) oder im Falle eines dort festgestellten unzulässigen Zustands mit anschließender Abschaltung des obersten Heizkreises die Heizeinrichtung mit den übrigen Heizkreisen (16b, 16c) weiterbetrieben wird, wobei eine entsprechende Information über diesen Zustand an einen Benutzer ausgegeben wird.

## Claims

**1.** Heating device (11) for heating liquids and/or for evaporating liquids for an electric cooking appliance (42), comprising:

- a container (12) for the liquid,
- the container (12) has a height which is greater than its width,
- on an outer face (13) of a lateral container wall, heating elements (15) are arranged in a manner distributed over a surface area,
- at least three separate and/or separately operable heating circuits (16), wherein each heating circuit has at least one heating element (15),
- a plurality of temperature sensors (21, 25) on the outer face (13) of the container wall,
- the plurality of temperature sensors (21, 25) is provided in a form of at least two types, wherein at least one temperature sensor of a first type (21) is a discrete component which is mounted on the outer face (13) of the container wall, and wherein at least one temperature sensor of a second type (25) is fitted in a form of a surface-area coating to the outer face (13) of said container wall,

**characterized in that**

- in the direction of the height of the container (12), each heating circuit (16) is at a distance from the other heating circuits,
- each heating circuit (16) covers a vertical region of the outer face (13) of the container wall.

**2.** Heating device according to claim 1, **characterized in that** per heating circuit (16) at least one temperature sensor of the first type (21) is provided, preferably precisely one single temperature sensor of the first type, wherein in particular the temperature sensor of the first type is provided in a region of and along a longitudinal axis of the container (12) on height level with the respective heating circuit, wherein preferably a distance between a temperature sensor of the first type (21) and a closest heating element (15) is between twice and twenty times a thickness of the container wall.

**3.** Heating device according to claim 1 or 2, **characterized in that** for the temperature sensor of the second type (25), a dielectric insulation layer is fitted on the outer face (13) of the container wall and the heating elements (15) of a heating circuit (16) are fitted over the dielectric insulation layer, wherein a covering layer is provided over the heating elements, wherein a measurement electrode (30) is provided on the covering layer, wherein a measuring device is connected both to the measurement electrode and also to the heating elements (15), and is designed to detect a current flow between the heating elements and the measurement electrode for evaluation as a measure of a change in temperature at the heating circuit or at the container (12) in a region close to said heating circuit, wherein preferably the insulation layer is fitted directly on the outer face (13) of the container wall and covers a large portion of the entire surface of the outer face of said container wall, in particular at least 90%, preferably a single continuous insulation layer beneath all of the heating elements (15).

4.  Heating device according to claim 3, **characterized in that** a further additional insulation layer is fitted on the insulation layer, in particular an intermediate glass layer, wherein preferably the heating elements (15) are fitted on the additional insulation layer.

5.  Heating device according to claim 3 or 4, **characterized in that** the measurement electrode (30) and the heating elements (15) run in different layers, preferably with the insulation layer and/or a covering layer therebetween, wherein in particular the measurement electrode is formed over a surface area and substantially covers the heating elements.

6.  Heating device according to any of the preceding claims, **characterized in that** per heating circuit (16) at least one temperature sensor of the second type (25) is provided, preferably precisely one temperature sensor of the second type, wherein the temperature sensor of the second type covers at least 50% of the surface area of the heating elements (15) of the respective heating circuit (16), in particular 90% to 100%.

7.  Heating device according to any of the preceding claims, **characterized in that** at least the two lowermost vertical regions are of equal height and, in particular an uppermost vertical region is at most 20% higher.

8.  Heating device according to any of the preceding claims, **characterized in that** the two lowermost heating circuits (16b, 16c) are of identical design with respect to their heating elements (15b, 15c), in particular also with respect to an arrangement of a temperature sensor of the first type (21) and/or of the second type (25) on the respective heating circuit.

9.  Heating device according to any of the preceding claims, **characterized in that**, in the two lowermost heating circuits (16b, 16c), the temperature sensor of the first type (21b, 21c) is arranged in the lower region of the heating circuits, in particular in the lowermost vertical regions of at most 10%, wherein the temperature sensor of said first type (21a) of the uppermost heating circuit (16a) is arranged in the upper vertical region of said heating circuit, preferably in the uppermost at most 15%.

10. Heating device according to any of the preceding claims, **characterized in that** a distance between the uppermost heating element (15a') of the uppermost heating circuit (16a) and an adjacent heating element (15a), which is situated below it, is greater than a distance between said adjacent heating element, which is situated below, and a next heating element and the other heating elements (15a) of said heating circuit (16a) beneath in relation to one another, wherein the distance preferably corresponds to between 20% and 90% of a width of the heating element.

11. Heating device according to any of the preceding claims, **characterized in that**, in a heating circuit (16), heating elements (15) are provided in at least two different configurations, wherein the heating elements differ in respect of electrical power, length, width and/or thickness, preferably differ only in respect of one of these abovementioned criteria and not in respect of the other abovementioned criteria, wherein in particular the two heating elements of at least two different configurations differ in respect of their width.

12. Heating device according to any of the preceding claims, **characterized in that** the heating elements (15) are in a form of heating conductors in track form and run parallel to one another, wherein a plurality of heating elements form a heating circuit (16) or partial heating circuits which can be actuated separately from one another and are connected in parallel to one another.

13. Heating device according to any of claims 1 to 11, **characterized in that** the heating elements (15) are in a form of heating conductors in track form and run parallel to one another, wherein a plurality of heating elements in track form are interconnected in series and in particular run in a meandering manner, wherein preferably two heating elements of a common heating circuit (16) form partial heating circuits and have a plurality of heating conductors in track form which run one into the other in a meandering manner.

14. Evaporator (40) for an electric cooking appliance (42) having a heating device (11) for heating and evaporating water, **characterized in that** the heating device is formed according to any of the preceding claims.

15. Method for operating a heating device (11) according to any of claims 1 to 13, **characterized in that** the temperature sensors of the first type (21) and of the second type (25) are evaluated in order to establish an event from the following group:

- increasing formation of limescale on an inner face of the container wall,
- locally limited overheating on the inner face of said container wall,
- drop in a filling level of water in the container (12) below a topmost heating circuit (16a),
- reduction in the filling level of water in the container (12) below a topmost heating element (15a) of the topmost heating circuit (16a).

**16.** Method according to claim 15, **characterized in that** an electrical resistance of said heating circuits (16) is monitored and evaluated over time in order to identify a formation of limescale over a large surface area of said inner face of the container wall, wherein preferably the evaluation is compared with an evaluation of the temperature sensors of the second type (25) in a form of surface-area temperature detection, wherein in particular a profile of a voltage of the temperature sensor of the second type with respect to a thickness of a layer of limescale on the container (12) is stored in a memory or is calculated using a formula which is derived from a stored curve, wherein, starting from a measured voltage of the temperature sensor of the second type (25), the thickness of a layer of limescale on the container is calculated using said formula.

**17.** Method according to claim 15 or 16, **characterized in that** values at the temperature sensors of the second type (25) are detected each time an operating cycle begins and/or at specific time intervals during operation, preferably 10 minutes to 60 minutes, wherein in particular in an event of an increase by 0.1% to 3% every 10 minutes to 60 minutes of operation, a formation of limescale on the inner face of the container wall is identified and a corresponding signal is emitted to a user.

**18.** Method according to any of claims 15 to 17, **characterized in that**, in an event of a breakdown of the topmost heating circuit (16a) of the heating device (11) or in an event of an impermissible state being established in the topmost heating circuit together with the topmost heating circuit subsequently being switched off, the heating device continues to be operated with the other heating circuits (16b, 16c), wherein corresponding information about this state is output to a user.

**Revendications**

**1.** Dispositif de chauffage (11) destiné à chauffer des liquides et/ou à évaporer des liquides destinés à un appareil de cuisson électrique (42), ledit dispositif comprenant :

- un récipient (12) destiné au liquide,
- le récipient (12) ayant une hauteur supérieure à sa largeur,
- des éléments chauffants (15) répartis de manière sensiblement bidimensionnelle étant disposés sur un côté extérieur (13) d'une paroi de récipient latérale,
- au moins trois circuits de chauffage (16) séparés et/ou pouvant fonctionner séparément, chaque circuit de chauffage comportant au moins un élément chauffant (15),
- une pluralité de capteurs de température (21, 25) du côté extérieur (13) de la paroi de récipient,
- la pluralité de capteurs de température (21, 25) étant présents dans au moins deux types, au moins un capteur de température d'un premier type (21) étant un composant discret qui est placé du côté extérieur (13) de la paroi de récipient, et au moins un capteur de température d'un deuxième type (25) étant appliqué sous la forme d'un revêtement sensiblement bidimensionnel du côté extérieur (13) de la paroi de récipient,

**caractérisé en ce que**

- chaque circuit de chauffage (16) est espacé des autres circuits de chauffage dans la hauteur du récipient (12),
- chaque circuit de chauffage (16) couvre une zone en hauteur du côté extérieur (13) de la paroi de récipient.

**2.** Dispositif de chauffage selon la revendication 1, **caractérisé en ce qu'**au moins un capteur de température du premier type (21) est prévu pour chaque circuit de chauffage (16), de préférence exactement un seul capteur de température du premier type, en particulier le capteur de température du premier type étant prévu au niveau du récipient (12) et le long d'un axe longitudinal de celui-ci à la hauteur du circuit de chauffage respectif, la distance entre un capteur de température du premier type (21) et un élément chauffant (15) le plus proche étant de préférence comprise entre deux et vingt fois l'épaisseur de la paroi de récipient.

**3.** Dispositif de chauffage selon la revendication 1 ou 2, **caractérisé en ce que**, en ce qui concerne le capteur de température du deuxième type (25), une couche d'isolation diélectrique est appliquée du côté extérieur (13) de la paroi de récipient, et les éléments chauffants (15) d'un circuit de chauffage (16) sont appliqués par-dessus la couche d'isolation diélectrique, une couche de recouvrement étant prévue par-dessus les éléments chauffants, une électrode de mesure (30) étant prévue sur la couche de recouvrement, un dispositif de mesure étant relié à la fois à l'électrode de mesure et aux éléments chauffants (15) et étant conçu pour détecter un flux de courant entre les éléments chauffants et l'électrode de mesure pour l'évaluation en tant que mesure d'une variation de température au niveau du circuit de chauffage ou du récipient (12) dans la zone proche du circuit de chauffage, la couche d'isolation étant de préférence appliquée directement sur le côté extérieur (13) de la paroi de récipient et recouvrant une grande partie de toute la surface de celle-ci, en particulier au moins 90 %, de préférence une seule couche d'isolation continue sous tous les éléments chauffants (15).

4. Dispositif de chauffage selon la revendication 3, **caractérisé en ce qu'**une autre couche d'isolation supplémentaire est appliquée sur la couche d'isolation, notamment en tant que couche de verre intermédiaire, les éléments chauffants (15) étant de préférence appliqués sur la couche d'isolation supplémentaire.

5. Dispositif de chauffage selon la revendication 3 ou 4, **caractérisé en ce que** l'électrode de mesure (30) et les éléments chauffants (15) s'étendent sur des couches différentes, de préférence avec la couche d'isolation et/ou une couche de recouvrement entre eux, en particulier l'électrode de mesure étant sensiblement bidimensionnelle et recouvrant sensiblement les éléments chauffants.

6. Dispositif de chauffage selon l'une des revendications précédentes, **caractérisé en ce qu'**au moins un capteur de température du deuxième type (25) est prévu pour chaque circuit de chauffage (16), de préférence exactement un capteur de température du deuxième type, le capteur de température du deuxième type couvrant au moins 50 % de la surface des éléments chauffants (15) du circuit de chauffage associé (16), en particulier 90 % à 100 %.

7. Dispositif de chauffage selon l'une des revendications précédentes, **caractérisé en ce qu'**au moins les deux zones de hauteur les plus basses sont à la même hauteur et en particulier la zone de hauteur la plus haute est au maximum 20 % plus élevée.

8. Dispositif de chauffage selon l'une des revendications précédentes, **caractérisé en ce que** les deux circuits de chauffage les plus bas (16b, 16c) sont conçus de manière identique en ce qui concerne leurs éléments chauffants (15b, 15c), notamment en ce qui concerne l'agencement d'un capteur de température du premier type (21) et/ou du deuxième type (25) sur le circuit de chauffage respectif.

9. Dispositif de chauffage selon l'une des revendications précédentes, **caractérisé en ce que**, dans le cas des deux circuits de chauffage les plus bas (16b, 16c), le capteur de température du premier type (21b, 21c) est disposé dans leur zone inférieure, notamment dans les 10 % maximum les plus bas de la zone de hauteur, le capteur de température du premier type (21a) du circuit de chauffage le plus haut (16a) étant disposé dans la zone de hauteur supérieure de ce circuit de chauffage, de préférence dans les 15 % maximum les plus hauts.

10. Dispositif de chauffage selon l'une des revendications précédentes, **caractérisé en ce que** la distance de l'élément chauffant le plus haut (15a') du circuit de chauffage le plus haut (16a) à l'élément chauffant sous-jacent adjacent (15a) est supérieure à celle de cet élément chauffant sous-jacent à l'élément chauffant suivant et des autres éléments chauffants (15a) de ce circuit de chauffage (16a) au-dessous les uns des autres, la distance correspondant de préférence à une valeur comprise entre 20 % et 90 % de la largeur de l'élément chauffant.

11. Dispositif de chauffage selon l'une des revendications précédentes, **caractérisé en ce que**, dans le cas d'un circuit de chauffage (16), des éléments chauffants (15) sont prévus dans au moins deux configurations différentes, les éléments chauffants différant par leur puissance électrique, leur longueur, leur largeur et/ou leur épaisseur, de préférence uniquement par l'un de ces critères susmentionnés et non par les autres critères susmentionnés, en particulier les deux éléments chauffants différant dans au moins deux configurations différentes par leur largeur.

12. Dispositif de chauffage selon l'une des revendications précédentes, **caractérisé en ce que** les éléments chauffants (15) sont conçus comme des conducteurs chauffants en forme de bande et sont parallèles les uns aux autres, une pluralité d'éléments chauffants formant un circuit de chauffage (16) ou des circuits de chauffage partiels qui peuvent être commandés séparément les uns des autres et qui sont montés en parallèle les uns aux autres.

13. Dispositif de chauffage selon l'une des revendications 1 à 11, **caractérisé en ce que** les éléments chauffants (15) sont réalisés sous forme de conducteurs chauffants en forme de bande et sont parallèles les uns aux autres, une pluralité d'éléments chauffants étant montés en série en tant que pistes et en particulier s'étendant en forme de méandre, de préférence deux éléments chauffants d'un circuit de chauffage commun (16) formant des circuits de chauffage partiels et comportant une pluralité de conducteurs de chauffage qui s'étendent en forme de méandre les uns dans les autres.

14. Évaporateur (40) destiné à un appareil de cuisson électrique (42) et comprenant un dispositif de chauffage (11) destiné à chauffer et évaporer de l'eau, **caractérisé en ce que** le dispositif de chauffage est conçu selon l'une des revendications précédentes.

15. Procédé de fonctionnement d'un dispositif de chauffage (11) selon l'une des revendications 1 à 13, **caractérisé en ce que** les capteurs de température du premier type (21) et du deuxième type (25) sont évalués pour déterminer un événement du groupe suivant :

 - calcification croissante du côté intérieur de la paroi de récipient,
 - surchauffe localement limitée du côté intérieur de la paroi de récipient,
 - baisse du niveau d'eau dans le récipient (12) sous le circuit de chauffage le plus haut (16a),
 - baisse du niveau d'eau dans le récipient (12) sous un élément chauffant le plus haut (15a) du circuit de chauffage le plus haut (16a).

16. Procédé selon la revendication 15, **caractérisé en ce qu'**une résistance électrique des circuits de chauffage (16) est surveillée et évaluée au cours du temps afin de détecter une calcification à grande échelle du côté intérieur de la paroi de récipient, cette évaluation étant de préférence comparée à une évaluation des capteurs de température du deuxième type (25) en tant que détection de température sensiblement bidimensionnelle, notamment un profil de la tension du capteur de température du deuxième type sur une épaisseur d'une couche de calcaire au niveau du récipient (12) étant stocké dans une mémoire ou étant calculé à l'aide d'une formule dérivée d'une courbe mémorisée, l'épaisseur d'une couche de calcaire au niveau du récipient étant calculée avec la formule sur la base d'une tension mesurée du capteur de température du deuxième type (25).

17. Procédé selon la revendication 15 ou 16, **caractérisé en ce que** l'acquisition des valeurs est effectuée au niveau des capteurs de température du deuxième type (25) à chaque début de cycle de fonctionnement et/ou à certains intervalles de temps de fonctionnement, de préférence de 10 minutes à 60 minutes, en particulier dans le cas d'une augmentation de 0,1 % à 3 %, une calcification du côté intérieur de la paroi de récipient étant détectée toutes les 10 minutes à 60 minutes de fonctionnement et un signal correspondant étant délivré à un utilisateur.

18. Procédé selon l'une des revendications 15 à 17, **caractérisé en ce que**, en cas de défaillance du circuit de chauffage le plus haut (16a) du dispositif de chauffage (11) ou en cas d'un état non autorisé déterminé à cet endroit avec arrêt ultérieur du circuit de chauffage le plus haut, le dispositif de chauffage continue de fonctionner avec les autres circuits de chauffage (16b, 16c), une information correspondante sur cet état étant délivrée à un utilisateur.

Fig. 1

EP 3 088 800 B1

18

Fig. 2

Fig. 3

Fig. 4

EP 3 088 800 B1

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0212790 A1
- WO 2008151798 A2
- EP 0363708 A2
- EP 1152639 A2

- DE 102012213385 A1
- DE 102013200277 A1
- WO 2007136268 A1